# FASCICULE DE BREVET EUROPEEN

(11) **EP 1 514 121 B1**
(45) Date de publication et mention de la délivrance du brevet: **21.06.2006**
(21) Numéro de dépôt: 02747491.5
(22) Date de dépôt: 31.05.2002
(51) Int. Cl.: G01P 1/00

(54) **DISPOSITIF DE DETECTION DE CHOCS SUR UN ENSEMBLE D'HELICE AERONAUTIQUE**
VORRICHTUNG ZUR ERMITTLUNG VON SCHLAGBELASTUNGEN AN EINEM FLUGZEUGPROPELLER
DEVICE FOR DETECTING IMPACTS ON AN AERONAUTIC PROPELLER

(43) Date de publication de la demande: 16.03.2005
(73) Titulaire: RATIER-FIGEAC, F-46100 Figeac (FR)
(72) Inventeur: GAIANI, Robert, F-46100 Figeac (FR)
(74) Mandataire: Bertrand, Didier
(86) Numéro de dépôt international: PCT/FR2002/001828
(87) Numéro de publication internationale: WO 2003/102599

(56) Documents cités:
- WO-A-99/57435
- FR-A- 2 557 973
- US-A- 3 387 120
- US-A- 4 524 620

## Description

La présente invention concerne la détection de chocs sur un ensemble d'hélice aéronautique constitué d'un moyeu et de pales. L'arrière-plan technologique impliquant l'enregistrement des contraintes auxquelles une pale est soumise est illustré par le document WO-A-99/57435.

Le but de l'invention est de proposer un dispositif pour pouvoir connaître au cours de la durée de vie d'une pale, lors d'interventions de maintenance programmée ou en cas d'incident, si la pale a été soumise à des chocs au-delà des niveaux normalement rencontrés en exploitation normale. Il s'agit de proposer un moyen fiable, autonome, détectant et enregistrant tout choc anormal en cours d'exploitation et consultable lors d'opérations de maintenance.

Dans une demande de brevet parallèle, déposée sous le numéro PCT/FR 02 01727, la Demanderesse a déjà proposé un dispositif de détection et enregistrement de chocs selon plusieurs axes sur une pale d'hélice aéronautique, caractérisé en ce qu'il comprend un accéléromètre à au moins deux axes intégré au coeur d'un pied de pale d'hélice aéronautique et un module électronique pour enregistrer au cours de la vie toute occurrence de chocs à différents niveaux prédéterminés. Le dispositif comprend un accéléromètre à au moins 2 axes intégré au sommet du dispositif d'équilibrage de la pale et il enregistre les chocs dans deux plans perpendiculaires à l'axe de la pale. On peut prévoir que les signaux de l'accéléromètre sont transmis à distance à un module électronique situé à un endroit quelconque et effectuant les enregistrements, mais, de manière avantageuse, le module électronique (et tous ses éléments annexes tels que l'alimentation qui sert aussi à l'accéléromètre) est également intégré dans le pied de la pale ; de sorte que le dispositif forme un tout autonome intégré à la pale, Ainsi, selon cette demande parallèle, de façon à déceler des chocs anormaux, les comptabiliser et les enregistrer, on intègre un accéléromètre à 2 ou 3 axes connecté à un module électronique autonome alimentant l'accéléromètre, récupérant les informations en retour de l'accéléromètre, de façon à les comparer aux niveaux prédéterminés, stockant en mémoire les occurrences au-delà des niveaux prédéterminés et intégrant un dispositif de lecture de la mémoire, soit par connexion directe, soit par transmission à distance de type UHF.

L'invention précédente propose donc l'intégration en pied de pale d'un système entièrement autonome de mesure et d'enregistrement de chocs au-delà de seuils prédéfinis, de façon à déceler, par interrogation du système, le nombre de cas rencontrés en exploitation pour les différents seuils prédéfinis.

Le but de la présente invention est de proposer une variante de la précédente invention.

L'invention atteint son but grâce à un dispositif de détection et d'enregistrement de chocs selon plusieurs axes sur un ensemble d'hélice aéronautique constitué d'un moyeu et de pales, caractérisé en ce qu'il comprend une pluralité d'accéléromètres intègres au moyeu de l'ensemble d'hélice aéronautique et placés au pied respectif d'une pluralité de pales et un module électronique pour enregistrer au cours de la vie toute occurrence de chocs à différents niveaux prédéterminés. Chaque accéléromètre à un ou deux axes est intégré au niveau de la liaison moyeu/pale dans le plan le mieux adapté en fonction du nombre d'axes, enregistrant les chocs en cours de fonctionnement.

Avantageusement, le dispositif comprend au moins un accéléromètre à au moins 2 axes intégré au moyeu et disposé dans le plan de chaque pale. Dans le cas où le nombre de pales et pair, il est intéressant d'installer dans un même plan un seul accéléromètre pour deux pales.

L'invention sera mieux comprise et d'autres avantages et caractéristiques seront mis en évidence à la lecture de la description suivante se référant aux dessins annexes sur lesquels :
la figure 1 est une vue en coupe d'un moyeu d'hélice et d'un pied de pale d'hélice montrant l'implantation du système capteur/module électronique,
les figures 2 et 3 sont des vues de face d'une l'hélice montrant l'implantation des capteurs par rapport aux pales, respectivement en nombre pair et impair,
la figure 4 est une variante de la figure 2 montrant une implantation simplifiée dans le cas d'un nombre de pales pair,
la figure 5 est une vue d'une variante de la figure 1 au niveau du moyen de lecture du module électronique,
la figure 6 schématise le module électronique.

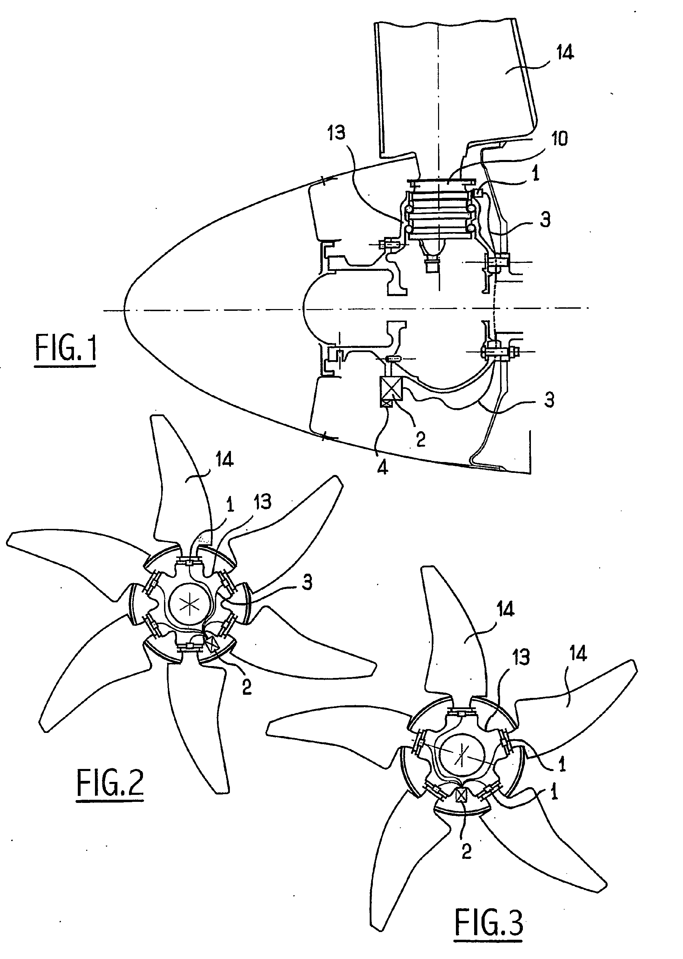

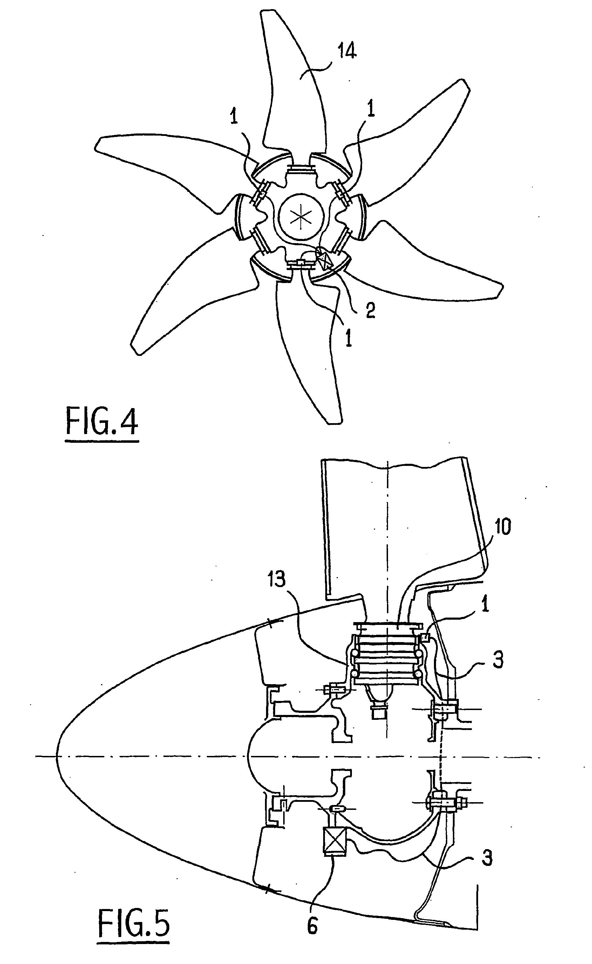

Les figures 1 et 5 montrent un exemple d'implantation du capteur de choc (accéléromètre) et du module électronique par rapport à un pied 10 de pale 14 d'hélice aéronautique. Le dispositif comporte d'une part un accéléromètre 1 à 2 ou 3 axes, fixé dans le moyeu 13 au voisinage du pied 10 et d'autre part un module électronique 2 autonome, également disposé dans le moyeu 13 et connecté à l'accéléromètre 1 via les fils de liaison 3.

La figure 1 présente un module électronique 2 intégrant un connecteur 4 pour la fonction de lecture des mémoires du module 2 par connexion directe ; l'intérêt majeur de cette version est son autonomie liée à la très faible consommation du module électronique.

Selon les figures 2 et 3, les capteurs 1, associés à un module électronique unique 2, sont aussi nombreux que les pales 14 et situés dans le plan de chaque pale. Cependant, dans le cas d'un nombre de pales pair, comme dans le cas de la figure 2, les pales sont opposées deux à deux, et on peut faire l'économie d'un capteur situé dans le plan commun de deux pales opposées ; c'est ce qui a été représenté en figure 4 où l'on a seulement trois capteurs 1 pour 6 pales 14.

La figure 5 présente un module électronique intégrant un dispositif de liaison par infrarouges 6 permettant une lecture à distance très simple, évitant les inconvénients d'une connexion physique.

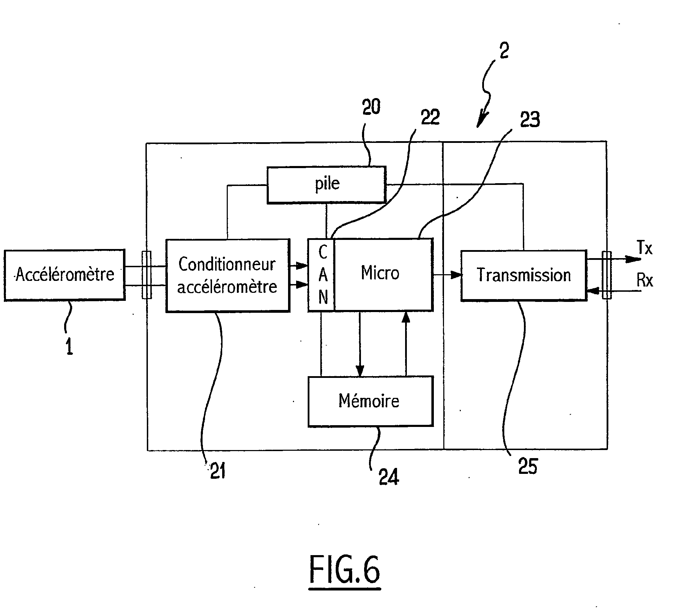

La figure 6 schématise le module électronique 2 comprenant l'alimentation en énergie 20 au moyen d'une pile de type lithium par exemple, un circuit 21 assurant le conditionnement des signaux des accéléromètres, le traitement des informations ou retour de ceux-ci via un Convertisseur Analogique Numérique 22 Microprocesseur 23 et une mémoire non volatile 24 permettant de stocker, sous forme de tableau, pour chaque axe des accéléromètres 1, le nombre d'occurrences de chocs pour chaque niveau prédéfini. Pour équiper le mode de réalisation de la figure 5, le module 2 comprend aussi un bloc de transmission 25 pour communiquer avec un émetteur Tx ou un récepteur Rx.

## Revendications

1. Dispositif de détection et enregistrement de chocs selon plusieurs axes sur un ensemble d'hélice aéronautique constitué d'un moyeu (13) et de pales (14), **caractérisé en ce qu'**il comprend une pluralité d'accéléromètres (1) intégrés au moyeu (13) de l'ensemble d'hélice aéronautique (13, 14) et placés au pied respectif d'une pluralité de pales (14) et un module électronique (2) pour enregistrer au cours de la vie toute occurrence de chocs à différents niveaux prédéterminés.

2. Dispositif selon la revendication 1, **caractérisé en ce qu'**il comprend au moins un accéléromètre (1) à au moins 2 axes intégré au moyeu et disposé dans le plan de chaque pale.

3. Dispositif selon l'une quelconque des revendications 1 ou 2, **caractérisé en ce que** le module électronique (2) est également intégré dans le moyeu (13) porteur des pales (14).

4. Dispositif selon l'une quelconque des revendications 1 à 3, **caractérisé par** une connexion directe au module électronique (2) pour lecture de l'enregistrement.

5. Dispositif selon l'une quelconque des revendications 1 à 3, **caractérisé par** une connexion à distance du module électronique (2) de type infrarouge pour lecture de l'enregistrement.

## Claims

1. A device for detecting and recording of impacts along several axes on an aeronautic propeller assembly made up of a hub (13) and blades (14), **characterized in that in that** it comprises a plurality of accelerometers (1) integrated at the hub (13) of the aeronautic propeller assembly (13, 14) and positioned at the respective root of a plurality of blades (14) and an electronic module (2) to record, during its service life, any occurrence of impact at various predetermined levels.

2. The device according to claim 1, further **characterized in that** it comprises at least one accelerometer (1) with at least 2 axes integrated in the hub and positioned in the plane of each blade.

3. The device according to either one of claims 1 or 2, further **characterized in that** the electronic module (2) is also integrated into the hub (13) that bears blades (14).

4. The device according to any one of claims 1 to 3, further **characterized by** a direct connection to electronic module (2) for reading the recording.

5. The device according to any one of claims 1 to 3, further **characterized by** a remote connection to electronic module (2) of the infrared type for reading the recording.

## Patentansprüche

1. Vorrichtung zur Ermittlung und zur Registrierung von Schlagbelastungen bzw. Stößen entlang mehrerer Achsen auf einer Flugzeugpropellereinheit, die aus einer Nabe bzw. einem Nabenwulst (13) und Flügeln bzw. Blättern (14) zusammengesetzt ist, **dadurch gekennzeichnet, daß** sie eine Mehrzahl von Beschleunigungsmessern (1), die an der Nabe (13) der Flugzeugpropellereinheit (13, 14) integriert sind und am entsprechenden Sockel einer Mehrzahl von Flügeln (14) angeordnet sind, und ein elektronisches Modul (2) umfaßt, um während der gesamten Lebensdauer ein Auftreten von Stößen bzw. Schlagbeanspruchungen auf verschiedenen vorbestimmten Niveaus zu registrieren.

2. Vorrichtung nach Anspruch 1, **dadurch gekennzeichnet, daß** sie wenigstens einen Beschleunigungsmesser (1) mit wenigstens 2 Achsen umfaßt, der an der Nabe integriert ist und in der Ebene von jedem Flügel angeordnet ist.

3. Vorrichtung nach einem der Ansprüche 1 oder 2, **dadurch gekennzeichnet, daß** das elektronische Modul (2) auch in den Träger der Nabe (13) der Flügel (14) integriert ist.

4. Vorrichtung nach einem der Ansprüche 1 bis 3, **gekennzeichnet durch** eine direkte Verbindung mit dem elektronischen Modul (2) für ein Lesen der Registrierung.

5. Vorrichtung nach einem der Ansprüche 1 bis 3, **dadurch gekennzeichnet** durch eine Fernverbindung der Infrarotart des elektronischen Moduls (2) für ein Lesen der Registrierung.
